# EUROPÄISCHE PATENTSCHRIFT

(11) **EP 2 580 476 B1**
(45) Veröffentlichungstag und Bekanntmachung des Hinweises auf die Patenterteilung: **27.02.2019**
(21) Anmeldenummer: 11722733.0
(22) Anmeldetag: 18.05.2011
(51) Int. Cl.: F04B 47/02, F04B 47/14, E21B 43/12, E21B 47/00, F16F 15/28

(54) **FÖRDERVORRICHTUNG MIT PLEUELSTANGE UND VERFAHREN ZUM REGELN EINER FÖRDERVORRICHTUNG MIT PLEUELSTANGE UND MINDESTENS EINEM AUSGLEICHSGEWICHT**
EXTRACTING DEVICE HAVING A CONNECTING ROD AND METHOD FOR CONTROLLING AN EXTRACTING DEVICE HAVING A CONNECTING ROD AND AT LEAST ONE COUNTERWEIGHT
DISPOSITIF DE FORAGE À BIELLE MOTRICE, ET PROCÉDÉ DE RÉGLAGE D'UN DISPOSITIF DE FORAGE PRÉSENTANT UNE BIELLE MOTRICE ET AU MOINS UN CONTREPOIDS

(30) Priorität: 14.06.2010 DE 102010023630
(43) Veröffentlichungstag der Anmeldung: 17.04.2013
(73) Patentinhaber: Sew-Eurodrive GmbH & Co. KG, 76646 Bruchsal (DE)
(72) Erfinder: BECKER, Günter, 76684 Östringen (DE); DEGEN, Dirk, 76646 Bruchsal (DE)
(86) Internationale Anmeldenummer: PCT/EP2011/002464
(87) Internationale Veröffentlichungsnummer: WO 2011/157337

(56) Entgegenhaltungen:
- US-A- 3 016 767
- US-A1- 2006 060 011
- US-B1- 6 386 322

## Beschreibung

Die Erfindung betrifft eine Fördervorrichtung mit Pleuelstange und ein Verfahren zum Regeln einer Fördervorrichtung mit Pleuelstange und mindestens einem Ausgleichsgewicht.

Es ist allgemein bekannt, dass Tiefpumpen von einem Antrieb angetrieben werden. Dabei ist bei Ausführung des Antriebs als elektrischer Antrieb die Wirkleistung des Antriebs erfassbar. Bei negativem Vorzeichen der Wirkleistung arbeitet der Antrieb generatorisch, bei positivem Vorzeichen arbeitet der Antrieb motorisch. Der Antrieb ist beispielsweise aus einem Getriebe ausführbar, das von einem Elektromotor antreibbar ist. Bei Wechsel zwischen der motorischen und generatorischen Betriebsart wird ein Zahnflankenwechsel der Verzahnungsteile des Getriebes ausgelöst und somit die Standzeit reduziert.

**Aus der** US 3 016 767 A **ist eine Ölförderpumpe bekannt.**

**Aus der** US 6 386 322 B1 **ist ebenfalls eine Ölförderpumpe bekannt.**

Der Erfindung liegt daher die Aufgabe zugrunde, eine Fördervorrichtung mit Pleuelstange und ein Verfahren zum Regeln einer Fördervorrichtung mit Pleuelstange und mindestens einem Ausgleichsgewicht weiterzubilden, wobei der Umweltschutz verbessert sein soll, insbesondere die Standzeit verlängert werden soll.

Erfindungsgemäß wird die Aufgabe bei der Fördervorrichtung nach den in Anspruch 1 und bei dem Verfahren nach den in Anspruch **8** angegebenen Merkmalen gelöst.

Wichtige Merkmale bei der Fördervorrichtung mit Pleuelstange sind, dass sie ein mit einer Welle fest verbundenes Teil aufweist, an dem ein Drehlager angeordnet ist, mittels dessen die Pleuelstange mit ihrem ersten Endbereich vom Teil aufgenommen ist, insbesondere so dass ein exzentrisches Antreiben der Pleuelstange ausführbar ist,
wobei auf dem Teil Ausgleichsgewichte mittels eines ersten Antriebs verschiebbar angeordnet sind,
wobei ein auf dem Teil ein erster Rechner vorgesehen ist, welcher die Verschiebung der Ausgleichsgewichte steuert.

Von Vorteil ist dabei, dass ein ständiger motorischer Betrieb der Vorrichtung erreichbar ist und somit Zahnflankenwechsel vermeidbar, also die Standzeit verbesserbar. Hierzu werden bei Änderung der Belastung, beispielsweise durch Viskositätsänderung des zu fördernden Mediums, die Ausgleichsgewichte derart verschoben, dass bei jeder Umdrehung des Teils, wie Kurbelscheibe, zu keinem Zeitpunkt generatorischer Betrieb auftritt. Außerdem wird die generatorische Energie vom Umrichter einem Bremswiderstand zum Umwandeln in thermische Energie zugeführt. Somit ist bei Vermeidung des generatorischen Betriebs der Umweltschutz verbessert.

Bei einer vorteilhaften Ausgestaltung ist das Drehlager auf dem Teil mittels eines zweiten Antriebs verschiebbar angeordnet, so dass der Abstand zwischen Drehlager und Mittelachse der Welle veränderbar ist,
insbesondere wobei mittels des ersten Rechner die Verschiebung des Drehlagers steuerbar ist. Von Vorteil ist dabei, dass somit der Hub veränderbar ist und dadurch auch die Fördermenge.

Bei einer vorteilhaften Ausgestaltung ist die Welle eine Abtriebswelle eines Getriebes, das von einem Elektromotor und/oder einem Verbrennungsmotor angetrieben ist. Von Vorteil ist dabei, dass die Wirkleistung erfassbar ist und somit insbesondere bei elektromotorischem Betrieb generatorische Betriebsarten einfach und schnell erkennbar ist.

Bei einer vorteilhaften Ausgestaltung sind die Ausgleichsgewichte derart verschiebbar angeordnet, dass der Schwerpunkt der aus dem Teil, den Ausgleichsgewichten und aus den zugehörigen, mit dem Teil fest verbundenen Komponenten gebildeten Anordnung parallel zur Verbindungslinie zwischen Drehlager und Achse der Welle verschiebbar ist. Von Vorteil ist dabei, dass mittels Verschiebung des Schwerpunktes auch ein eventuell auftretender generatorischer Betrieb in einem Winkelbereich der Umdrehung der Abtriebswelle des Getriebes verhinderbar ist, indem die Ausgleichsgewichte und somit der Schwerpunkt geeignet verschoben werden.

Bei einer vorteilhaften Ausgestaltung ist die Fördervorrichtung eine Tiefpumpe, insbesondere Ölpumpe zur Förderung von Erdöl. Von Vorteil ist dabei, dass auf dem drehbar gelagerten Teil, das mit der Abtriebswelle fest verbunden und somit zusammen mit dieser mitdreht, Antriebe anordenbar sind, die zum Verstellen der Ausgleichsgewichte beziehungsweise zum Verstellen des Drehlagers geeignet sind, und berührungslos versorgbar sind.

Bei einer vorteilhaften Ausgestaltung weist das Teil eine Kurbelscheibe und/oder eine einzige Gewichtsplatte oder mindestens zwei Gewichtsplatten auf. Von Vorteil ist dabei, dass Unwucht ausgleichbar ist.

Bei einer vorteilhaften Ausgestaltung ist am Teil ein erster Rechner angeordnet, der eine Datenaustauschverbindung zu einem stationär angeordneten zweiter Rechner aufweist,
insbesondere wobei die Datenaustauschverbindung kontaktlos und/oder berührungslos ausgeführt ist, insbesondere mittels elektromagnetischen Wellen, wie Infrarotwellen oder Funkwellen. Von Vorteil ist dabei, dass auf dem über die Abtriebswelle des Getriebes drehbar gelagerten Teil elektrische Antriebe anordenbar sind, die berührungslos versorgbar sind.

Bei einer vorteilhaften Ausgestaltung sind Mittel zur Erfassung der Wirkleistung des die Welle antreibenden Antriebs mit dem stationär angeordneten zweite Rechner verbunden. Von Vorteil ist dabei, dass die Wirkleistung in einfacher Weise erfassbar ist, beispielsweise durch Bestimmung des Wirkstroms und der Wirkspannung mittels eines den Elektromotor speisenden Umrichters. Denn im Umrichter werden Strommesswerte und Spanungsmesswerte der dortigen Steuerelektronik zugeführt, so dass ohne wesentlichen Zusatzaufwand die Bestimmung der Wirkleistung ermöglicht ist.

Bei einer vorteilhaften Ausgestaltung sind der erste Rechner und die weiteren am Teil angeordneten elektrischen Verbraucher kontaktlos, insbesondere induktiv, versorgt, insbesondere wobei ein Primärleitersystem stationär angeordnet ist und am Teil mindestens eine Sekundärwicklung, die induktiv angekoppelt vorgesehen ist,
insbesondere wobei der Sekundärwicklung jeweils eine derartige Kapazität parallel und/oder in Reihe zugeschaltet ist, dass die zugehörige Resonanzfrequenz im Wesentlichen der Frequenz eines in das Primärleitersystem eingeprägten Wechselstroms entspricht. Von Vorteil ist dabei, dass auf dem drehenden Teil Verbrauchern Energie kontaktlos und berührungslos zuführbar ist. Somit ist auch bei schmutziger Umgebung die notwendige Leistung zum Verstellen der Antriebe bereitstellbar.

Wichtige Merkmale bei dem Verfahren zum Regeln einer Fördervorrichtung mit Pleuelstange und mindestens einem Ausgleichsgewicht, sind, dass die Pleuelstange von einem Antrieb angetrieben wird, insbesondere exzentrisch, insbesondere über eine als Teil ausgeführte Kurbelscheibe,
wobei die Wirkleistung des Antriebs erfasst wird,
wobei abhängig von der erfassten Wirkleistung, insbesondere abhängig von deren Vorzeichen, und/oder abhängig von aus dem zeitlichen Verlauf der Wirkleistung bestimmten Werten, insbesondere Extremalwerte, das oder zumindest ein Ausgleichsgewicht verschoben wird.

Von Vorteil ist dabei, dass generatorischer Betrieb unmittelbar erkennbar ist und durch Verschieben der Ausgleichsgewichte zum Verschwinden bringbar ist.

Bei einer vorteilhaften Ausgestaltung ist auf dem Teil ein Drehlager für die Pleuelstange verschiebbar angeordnet, so dass der Abstand zwischen Drehlager und Mittelachse der Welle veränderbar ist,
wobei abhängig von der erfassten Wirkleistung und/oder abhängig von aus dem zeitlichen Verlauf der Wirkleistung bestimmten Werten, insbesondere Extremalwerte, der Abstand verändert wird, insbesondere also das Drehlager verschoben wird. Von Vorteil ist dabei, dass der Hub der Pumpe verstellbar ist und somit die Förderleistung veränderlich. Somit ist die Leistung des elektrischen Antriebs voll ausnutzbar.

Bei einer vorteilhaften Ausgestaltung wird aus dem zeitlichen Verlauf der Wirkleistung ein lokales Extremum, insbesondere lokales Minimum, bestimmt und der zugehörige Wirkleistungswert als Istwert einem ersten Regler zugeführt, wobei der Istwert auf einen Sollwert hin geregelt wird, indem als Stellgröße des Reglers die Verschiebung des Ausgleichsgewichts verwendet ist, insbesondere zum Erreichen eines rein motorischen Betriebes des Antriebs,
insbesondere wobei der Sollwert Null ist oder einen positiven Wert aufweist, der kleiner als ein Fünftel, kleiner als ein Zehntel oder kleiner als ein Zwanzigstel der Nennleistung oder dauerhaft maximal zulässigen Leistung des Antriebs ist. Von Vorteil ist dabei, dass auch bei Änderung der Viskosität des zu fördernden Mediums oder bei Änderung der Fördertiefe ein Verbleiben in der motorischen Betriebsart gewährleistbar ist. Insbesondere wird hierzu ein schnell reagierender Regler eingesetzt und der Sollwert in den positiven nicht verschwindenden Bereich der Wirkleistung gelegt.

Als Regler ist vorzugsweise ein linearer Regler verwendbar, der auch eine Vorsteuerung zusätzlich aufweisen darf. Als linearer Regler sind nicht nur Proportionalregler, also P-Regler, sondern auch PI-Regler oder sogar PID-Regler vorteilhaft verwendbar.

Bei einer vorteilhaften Ausgestaltung wird aus dem zeitlichen Verlauf der Wirkleistung ein lokales Extremum, insbesondere lokales Maximum, bestimmt und der zugehörige Wirkleistungswert wird als Istwert einem zweiten Regler zugeführt, wobei der Istwert auf einen Sollwert hin geregelt wird, indem als Stellgröße des Reglers die Verschiebung des Drehlagers verwendet ist, insbesondere zum Optimieren der Förderleistung oder zum Erreichen einer gewünschten, insbesondere von einer übergeordneten Steuerung vorgegebenen Förderleistung,
insbesondere wobei der Sollwert die Nennleistung des Antriebs ist oder zumindest 80% der Nennleistung des Antriebs überschreitet. Von Vorteil ist dabei, dass der elektrische Antrieb optimal nutzbar ist und nicht überdimensioniert werden muss.

Bei einer vorteilhaften Ausgestaltung werden erster und zweiter Regler zeitlich abwechselnd betrieben,
insbesondere wobei der erste Regler jeweils eine erste Zeitspanne, insbesondere eine vorgebbare Zeitspanne, und der zweite Regler dann eine zweite Zeitspanne, insbesondere eine vorgebbare Zeitspanne, betrieben wird. Von Vorteil ist dabei, dass beispielsweise nach Auftreten einer Viskositätsänderung oder bei Änderung der Fördertiefe oder Zuflusstiefe zunächst der generatorische Betrieb verhinderbar ist und dann das Optimieren der Auslastung des elektrischen Antriebs und somit der Förderleistung ermöglicht ist.

Bei einer vorteilhaften Ausgestaltung ist der erste Regler mit einer kleineren Zeitkonstante wirksam als der zweite Regler, insbesondere wobei erster und zweiter Regler gleichzeitig betrieben werden. Von Vorteil ist dabei, dass ein gleichzeitiges Betreiben ermöglicht ist und trotzdem der erste Regler mit höherer Priorität betreibbar ist. Denn die Zeitkonstante bezieht sich auf die Zeitdauer, in welcher eine Veränderung des Istwertes ausregelbar ist, bis also der Istwert im Wesentlichen auf den Sollwert hingeregelt ist, wenn keine anderen Störungen wirksam sind. Wenn also der erste Regler derart ausgelegt wird, dass er mindestens fünfmal oder gar mindestens zehnmal schneller als der zweite Regler betrieben wird, werden die Minimalwerte des zeitlichen Verlaufs der Wirkleistung sehr schnell auf Null oder einen entsprechenden Sollwert geregelt, währenddessen die Maximalwerte langsamer in Richtung auf ihren Sollwert, also beispielsweise Nennleistung, hin geregelt werden. Die beiden Regler sind sozusagen zeitlich entkoppelt und stören sich somit nicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Ölpumpe schematisch skizziert.

In der Figur 2 ist ein Getriebe der Ölpumpe gezeigt, dass eine Gewichtsplatte 8 antreibt.

In der Figur 3 ist der Verlauf der Wirkleistung zeitabhängig gezeigt, wenn in einem Teilbereich jeder Umdrehung der Antrieb der Ölpumpe generatorisch arbeitet.

In der Figur 4 ist der Verlauf der Wirkleistung zeitabhängig gezeigt, wenn der Antrieb in jeder Umdrehung der Ölpumpe motorisch arbeitet.

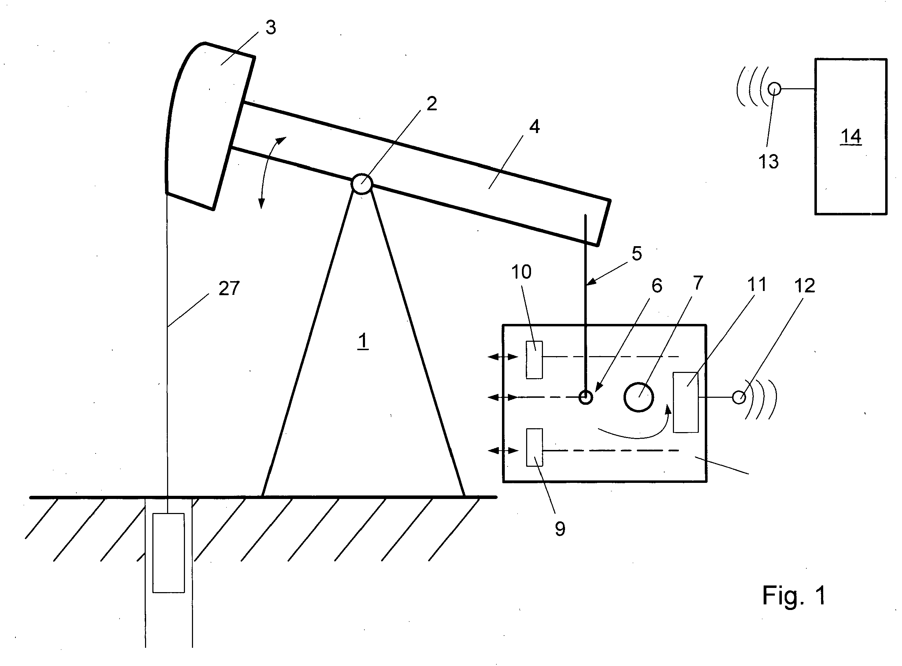

In Figur 1 ist ein Lagerbock 27 gezeigt, an dem über ein Drehlager 2 eine drehbar gelagerte Wippe 4 mit einer Halterung 3, die einen festgelegten Abstand zum Drehlager 2 aufweist, gelagert ist, wobei an der Halterung 3 das Fördergestänge 27 verbunden ist. Bei einer Ausführung als Tiefpumpe ist das Fördergestänge auch als Ölpumpengestänge bezeichenbar. An der Wippe 4 ist auf der der Halterung 3 gegenüberliegenden Seite der Wippe 4 eine Pleuelstange 5 verbunden, an der wiederum eine Gewichtsplatte 8 angehängt ist. Die Gewichtsplatte 8 ist mit einer Abtriebswelle 7 eines Getriebes 26 fest verbunden, das von einem Elektromotor angetrieben wird. Somit versetzt die Abtriebswelle die Gewichtsplatte 8 in Drehbewegung um die Achse der Abtriebswelle 7 herum. Die Pleuelstange 5 ist über ein Drehlager 6 an der Gewichtsplatte 8 befestigt und wird somit exzentrisch angetrieben.

An der Gewichtsplatte sind Schienen 20 vorhanden, die parallel zur Verbindungslinie zwischen Achse der Abtriebswelle 7 und Mittelpunkt des Drehlagers 6 ausgerichtet sind und auf denen Ausgleichsgewichte (9, 10) verschiebbar angeordnet sind. Wichtig ist dabei, dass durch Verschiebung der Ausgleichsgewichte eine Verschiebung des Schwerpunktes erreichbar ist, insbesondere in Richtung der Verbindungslinie. Auf diese Weise ist eine Beeinflussung der Arbeitsweise der Ölpumpe erreichbar, insbesondere ein Erniedrigen der generatorischen Leistung pro Umdrehung der Abtriebswelle.

Auf der Gewichtsplatte 8 sind zum Verschieben der Ausgleichsgewichte elektrische Antriebe angeordnet, die von einer Rechnereinheit 11 gesteuert werden. Dabei ist die Rechnereinheit 11 mit einer Antenne 12 zum Datenaustausch mit einer stationär angeordneten Rechnereinheit verbunden. Die stationär angeordnete Rechnereinheit ist mit einer Antenne 13 zum berührungslosen Datenaustausch, insbesondere per Funk, verbunden. Außerdem ist sie mit einem Mittel 14 zur Erfassung der Wirkleistung eines Umrichters zur Speisung eines eintriebsseitig am Getriebe 26 angeordneten Elektromotors verbunden. Somit ist die Wirkleistung des elektrischen Antriebs, umfassend das Getriebe 26, erfassbar und aus dem zeitlichen Verlauf der Wirkleistung sind geeignete regelungstechnische Größen bestimmbar, wie beispielsweise Minimalwerte und Maximalwerte.

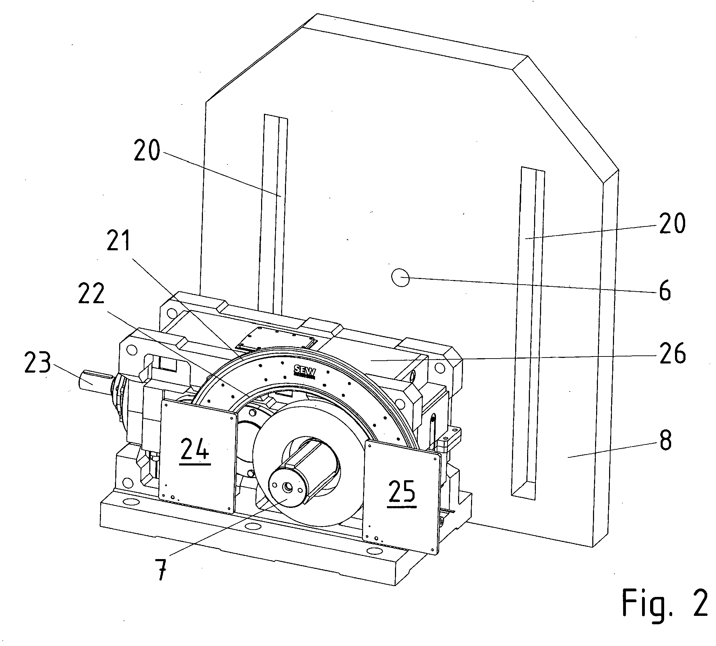

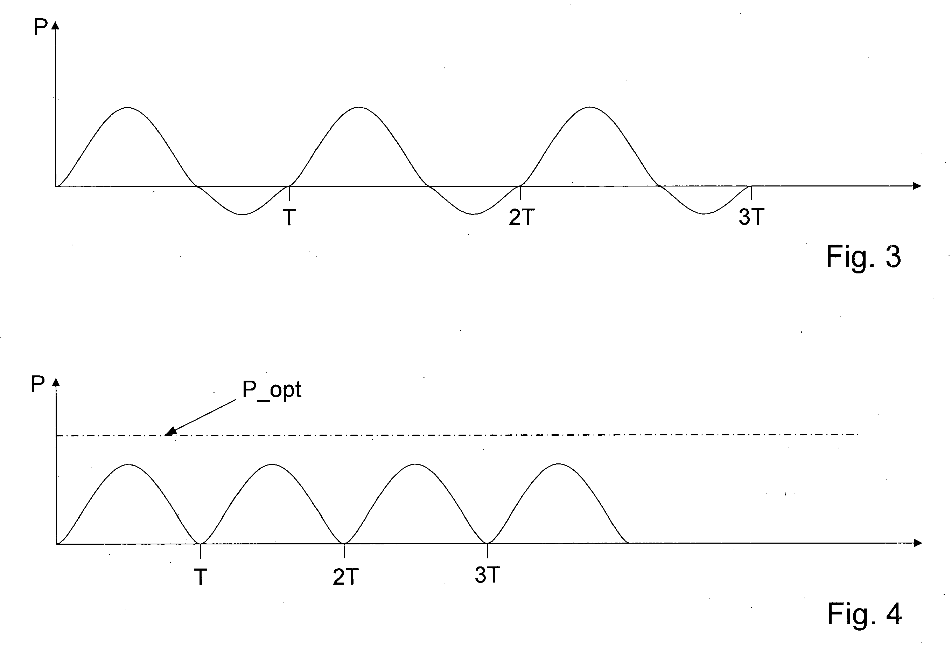

Anhand der in Figur 2 und 3 dargestellten zeitlichen beispielhaften Verläufe der Wirkleistung wird nun das von der Rechnereinheit angewandte Regelungsverfahren näher erläutert.

In Figur 3 weist der beispielhaft gezeigte zeitliche Verlauf der Wirkleistung P Minimalwerte auf, die im negativen Bereich sich befinden. Dies bedeutet, dass zumindest innerhalb eines zeitlichen Anteils pro Umdrehung, also innerhalb eines Zeitintervalls der Umdrehungsdauer oder Periodendauer T, generatorisch erzeugte Leistung auftritt. Somit wird die Leistung des Motors zum Pumpen nicht ausreichend ausgenutzt. Die Minimalwerte werden als Istwerte einem Regler zugeführt und auf den Sollwert Null oder einen kleinen positiven Wert hin geregelt, indem die Ausgleichsgewichte verschoben werden. Die Position der Ausgleichsgewichte (9, 10) dient also als Stellgröße des Reglers.

Als Regler ist ein linearer Regler, wie P-Regler, also Proportionalregler, oder PI Regler oder PID Regler, verwendbar.

Bei einem im positiven Bereich liegenden Verlauf der Wirkleistung, wie beispielhaft in Figur 4 dargestellt, werden die Maximalwerte erfasst und auf einen Sollwert, beispielsweise den Nennwert des das Getriebe 26 antreibenden elektrischen Motors, hin geregelt, indem der Abstand des Drehlagers 6 zur Achse der Abtriebswelle 7 mittels eines weiteren elektrischen Antriebs, welcher auf der Gewichtsplatte 8 angeordnet ist, verstellt wird. Das Drehlager 6 ist also auf der Gewichtsplatte verschiebbar angeordnet. Hierdurch ist also der Hubweg verstellbar und somit als Stellgröße des zweiten Reglers verwendbar.

Der erste und zweite Regler sind beispielsweise alternierend betreibbar. Dies bedeutet, dass erst nach dem Verschwinden der generatorischen Zeitbereiche pro Umdrehung der zweite Regler aktiviert wird und die Spitzenwerte in Richtung auf die gewünschten Sollwerte an Wirkleistungsspitzenwerten regelt.

Wie in Figur 1 gezeigt ist, sind die Ausgleichsgewichte (9, 10) entlang der Verschiebungsschienen 20 verschiebbar.

Außerdem ist die Abtriebswelle des Getriebes 26 beidseitig aus dem Getriebe herausgeführt und somit ist die Gewichtsplatte zweistückig ausführbar, also aus zwei über die Abtriebswelle 7 miteinander verbundenen Gewichtsplattenstücken. In Figur 2 ist das Gewichtsplattenstück 8 auf einer ersten axialen Seite der Abtriebswelle 7 gezeigt. Das zweite Gewichtsplattenstück ist hierzu auf der anderen axialen Seite der Abtriebswelle 7 parallel zum gezeigten Gewichtsplattenstück 8 angeordnet. Auf jedem Gewichtsplattenstück sind zwei Sekundärwicklungen (24, 25) befestigt, die induktiv an ein Primärleitersystem angekoppelt sind. Das Primärleitersystem ist elektrisch als geschlossene Stromschleife ausgeführt, die von einer Einspeisequelle mit einem Wechselstrom beaufschlagt wird. Das Primärleitersystem ist hierbei aus einem ringförmig verlegten Primärleiter 21, der als Hinleiter fungiert, und aus einem konzentrisch zu diesem, ebenfalls ringförmig verlegten Primärleiter 22, der als Rückleiter fungiert, zusammengesetzt.

Mittels der induktiven Kopplung ist Energie berührungslos übertragbar an die auf der Gewichtsplatte angeordneten Verbraucher, also elektrischen Antriebe für die Ausgleichsgewichte, elektrischer Antrieb für die Achsabstandsverstellung, also elektrischer Antrieb für die Verstellung des Abstandes des Drehlagers 6 zur Achse der Abtriebswelle 7.

In Figur 2 ist die Eintriebswelle 23 gezeigt, die von einem nicht gezeigten elektrischen Motor oder von einem Verbrennungsmotor antreibbar ist.

Die Sekundärwicklungen (24, 25) sind als Flachwicklungen ausgeführt. Vorzugsweise sind die Flachwicklungen hierbei um einen T-förmigen oder E-förmigen Ferritkern ausgeführt, wobei die Schenkel des T oder E sehr kurz sind, insbesondere nur doppelt so lang wie die Breite der Flachwicklungen.

Zum Verstellen der Ausgleichsgewichte und/oder des Drehlagers werden vorzugsweise Linearaktoren, wie elektrisch angetriebene Spindelantriebe oder Synchronlinearmotoren, verwendet.

In einem weiteren erfindungsgemäßen Ausführungsbeispiel wird statt der genannten Funkübertragung der Daten eine Infrarotübertragung oder eine andere berührungslose Datenübertragung ausgeführt, insbesondere als Aufmodulation

### Bezugszeichenliste

1 Lagerbock
2 Drehlager
3 Halterung für Fördergestänge mit festgelegtem Abstand zum Drehlager 2
4 drehbar gelagerte Stange, insbesondere Wippe
5 Pleuelstange
6 Drehlager
7 Abtriebswelle eines Getriebes
8 Gewichtsplatte
9 verschiebbar angeordnetes Ausgleichsgewicht
10 verschiebbar angeordnetes Ausgleichsgewicht
11 Rechnereinheit
12 Antenne zum Datenaustausch
13 Antenne zum Datenaustausch
14 Mittel zur Erfassung der Wirkleistung eines Umrichters zur Speisung eines eintriebsseitig am Getriebe angeordneten Elektromotors
20 Verschiebungsschiene
21 Primärleiter
22 Primärleiter
23 Eintriebswelle
24 Sekundärwicklung
25 Sekundärwicklung
26 Getriebe
27 Fördergestänge, insbesondere Ölpumpengestänge
T Periodendauer
P Wirkleistung
P_Opt Sollwert für gewünschte oder optimale Fördermenge

## Patentansprüche

1. Fördervorrichtung mit Pleuelstange (5),
umfassend ein mit einer Welle fest verbundenes Teil, an dem ein Drehlager (6) angeordnet ist, mittels dessen die Pleuelstange (5) mit ihrem ersten Endbereich vom Teil aufgenommen ist, insbesondere so dass ein exzentrisches Antreiben der Pleuelstange (5) ausführbar ist,
wobei auf dem Teil Ausgleichsgewichte (9, 10) mittels eines ersten Antriebs verschiebbar angeordnet sind,
**dadurch gekennzeichnet, dass**
auf dem Teil ein erster Rechner vorgesehen ist, welcher die Verschiebung der Ausgleichsgewichte (9, 10) steuert,
**wobei das Drehlager (6) auf dem Teil mittels eines zweiten Antriebs verschiebbar angeordnet ist, so dass der Abstand zwischen Drehlager (6) und Mittelachse der Welle veränderbar ist,**
**wobei mittels des ersten Rechner die Verschiebung des Drehlagers (6) steuerbar ist,**
**wobei die Ausgleichsgewichte (9, 10) derart verschiebbar angeordnet sind, dass der Schwerpunkt der aus dem Teil, den Ausgleichsgewichten und aus den zugehörigen, mit dem Teil fest verbundenen Komponenten gebildeten Anordnung parallel zur Verbindungslinie zwischen Drehlager (6) und Achse der Welle verschiebbar ist.**

2. Fördervorrichtung **nach Anspruch 1,**
**dadurch gekennzeichnet, dass**
die Welle eine Abtriebswelle eines Getriebes ist, das von einem Elektromotor und/oder einem Verbrennungsmotor angetrieben ist.

3. Fördervorrichtung nach mindestens einem der vorangegangenen Ansprüche,
**dadurch gekennzeichnet, dass**
die Fördervorrichtung eine Tiefpumpe, insbesondere Ölpumpe zur Förderung von Erdöl, ist.

4. Fördervorrichtung nach mindestens einem der vorangegangenen Ansprüche,
**dadurch gekennzeichnet, dass**
das Teil eine Kurbelscheibe ist und/oder eine einzige Gewichtsplatte oder mindestens zwei Gewichtsplatten aufweist.

5. Fördervorrichtung nach mindestens einem der vorangegangenen Ansprüche,
**dadurch gekennzeichnet, dass**
am Teil ein erster Rechner angeordnet ist, der eine Datenaustauschverbindung zu einem stationär angeordneten zweiter Rechner aufweist,
wobei die Datenaustauschverbindung kontaktlos und/oder berührungslos ausgeführt ist, insbesondere mittels elektromagnetischen Wellen, wie Infrarotwellen oder Funkwellen.

6. Fördervorrichtung nach mindestens einem der vorangegangenen Ansprüche,
**dadurch gekennzeichnet, dass**
Mittel zur Erfassung der Wirkleistung des die Welle antreibenden Antriebs mit dem stationär angeordneten zweiten Rechner verbunden sind.

7. Fördervorrichtung nach mindestens einem der vorangegangenen Ansprüche,
**dadurch gekennzeichnet, dass**
der erste Rechner und die weiteren am Teil angeordneten elektrischen Verbraucher kontaktlos, insbesondere induktiv, versorgt sind,
insbesondere wobei ein Primärleitersystem stationär angeordnet ist und am Teil mindestens eine Sekundärwicklung, die induktiv angekoppelt vorgesehen ist,
insbesondere wobei der Sekundärwicklung jeweils eine derartige Kapazität parallel und/oder in Reihe zugeschaltet ist, dass die zugehörige Resonanzfrequenz im Wesentlichen der Frequenz eines in das Primärleitersystem eingeprägten Wechselstroms entspricht.

8. Verfahren zum Regeln einer Fördervorrichtung **nach Anspruch 1,**
wobei die Pleuelstange (5) von einem Antrieb angetrieben wird, insbesondere exzentrisch,
**dadurch gekennzeichnet, dass**
die Wirkleistung des Antriebs erfasst wird,
wobei abhängig von der erfassten Wirkleistung, insbesondere abhängig von deren Vorzeichen, und/oder abhängig von aus dem zeitlichen Verlauf der Wirkleistung bestimmten Werten, insbesondere Extremalwerte, das oder zumindest ein Ausgleichsgewicht verschoben wird,
**wobei aus dem zeitlichen Verlauf der Wirkleistung ein lokales Extremum bestimmt wird und der zugehörige Wirkleistungswert als Istwert einem ersten Regler zugeführt wird, wobei der Istwert auf einen Sollwert hin geregelt wird, indem als Stellgröße des Reglers die Verschiebung des Ausgleichsgewichts verwendet ist zum Erreichen eines rein motorischen Betriebes des Antriebs,**
**wobei der Sollwert Null ist oder einen positiven Wert aufweist.**

9. Verfahren **nach Anspruch 8,**
**dadurch gekennzeichnet, dass**
**die Pleuelstange (5) von einem Antrieb angetrieben wird über eine als Teil ausgeführte Kurbelscheibe,**
**wobei** auf dem Teil ein Drehlager (6) für die Pleuelstange (5) verschiebbar angeordnet ist, so dass der Abstand zwischen Drehlager (6) und Mittelachse der Welle veränderbar ist,
wobei abhängig von der erfassten Wirkleistung und/oder abhängig von aus dem zeitlichen Verlauf der Wirkleistung bestimmten Werten, insbesondere Extremalwerte, der Abstand verändert wird, insbesondere also das Drehlager (6) verschoben wird.

10. Verfahren **nach Anspruch 8,**
**dadurch gekennzeichnet, dass**
**auf dem Teil ein Drehlager (6) für die Pleuelstange (5) verschiebbar angeordnet ist, so dass der Abstand zwischen Drehlager (6) und Mittelachse der Welle veränderbar ist,**
**wobei abhängig von der erfassten Wirkleistung und/oder abhängig von aus dem zeitlichen Verlauf der Wirkleistung bestimmten Werten, insbesondere Extremalwerte, der Abstand verändert wird, also das Drehlager (6) verschoben wird,**
**wobei aus dem zeitlichen Verlauf der Wirkleistung ein lokales Extremum bestimmt wird und der zugehörige Wirkleistungswert als Istwert einem zweiten Regler zugeführt wird, wobei der Istwert auf einen Sollwert hin geregelt wird, indem als Stellgröße des Reglers die Verschiebung des Drehlagers (6) verwendet ist zum Optimieren der Förderleistung.**

11. Verfahren nach einem der Ansprüche 8 bis 10,
**dadurch gekennzeichnet, dass**
erster und zweiter Regler zeitlich abwechselnd betrieben werden,
insbesondere wobei der erste Regler jeweils eine erste Zeitspanne, insbesondere eine vorgebbare Zeitspanne, und der zweite Regler dann eine zweite Zeitspanne, insbesondere eine vorgebbare Zeitspanne, betrieben wird.

12. Verfahren nach einem der Ansprüche 8 bis 11,
**dadurch gekennzeichnet, dass**
der erste Regler mit einer kleineren Zeitkonstante wirksam ist als der zweite Regler,
insbesondere wobei erster und zweiter Regler gleichzeitig betrieben werden.

## Claims

1. An extracting device having a connecting rod (5).
comprising a part which is fixedly connected to a shaft and on which a pivot bearing (6) is arranged, by means of which the connecting rod (5) is received by the part via its first end region, in particular so that eccentric driving of the connecting rod (5) can be realised,
wherein balance weights (9, 10) are arranged on the part such that they are displaceable by means of a first drive,
**characterised in that**
a first computer is provided on the part, which controls the displacement of the balance weights (9, 10),
wherein the pivot bearing (6) is arranged on the part such that it is displaceable by means of a second drive, so that the spacing between the pivot bearing (6) and the centre axis of the shaft is alterable,
wherein the displacement of the pivot bearing (6) is controllable by means of the first computer,
wherein the balance weights (9, 10) are displaceably arranged in such a way that the centre of gravity of the arrangement formed by the part, the balance weights and by the associated components fixedly connected to the part is displaceable parallel to the connecting line between the pivot bearing (6) and the axis of the shaft.

2. The extracting device according to Claim 1,
**characterised in that**
the shaft is an output shaft of a gear which is driven by an electric motor and/or an internal combustion engine.

3. The extracting device according to at least one of the preceding claims,
**characterised in that**
the extracting device is a subsurface pump, in particular an oil pump for extracting crude oil.

4. The extracting device according to at least one of the preceding claims,
**characterised in that**
the part is a crank disc and/or has a single weight plate or at least two weight plates.

5. The extracting device according to at least one of the preceding claims,
**characterised in that**
a first computer is arranged on the part, which has a data exchange connection to a second computer arranged in a stationary manner,
wherein the data exchange connection is realised in a contactless and/or touchless manner, in particular by means of electromagnetic waves, such as infrared waves or radio waves.

6. The extracting device according to at least one of the preceding claims,
**characterised in that**
means for recording the effective power of the drive driving the shaft are connected to the second computer arranged in a stationary manner.

7. The extracting device according to at least one of the preceding claims,
**characterised in that**
the first computer and the further electrical consumers arranged on the part are contactlessly, in particular inductively, powered,
in particular wherein a primary conductor system is arranged in a stationary manner and at least one secondary winding, which is inductively coupled, is provided on the part,
in particular wherein a capacitance is connected in each case in parallel and/or in series to the secondary winding such that the associated resonant frequency corresponds substantially to the frequency of an alternating current impressed into the primary conductor system.

8. A method for controlling an extracting device according to Claim 1,
wherein the connecting rod (5) is driven by a drive, in particular eccentrically,
**characterised in that**
the effective power of the drive is recorded,
wherein, depending on the recorded effective power, in particular depending on the preceding sign thereof, and/or depending on values determined from the time characteristic of the effective power, in particular extremal values, the balance weight, or at least one balance weight, is displaced,
wherein, from the time characteristic of the effective power, a local extremum is determined and the associated effective power value is supplied to a first controller as an actual value, wherein the actual value is controlled to a set value **in that** the displacement of the balance weight is used as an actuating variable of the controller for achieving a purely motor operation of the drive,
wherein the set value is zero or has a positive value.

9. The method according to Claim 8,
**characterised in that**
the connecting rod (5) is driven by a drive via a crank disc which is realised as the part,
wherein a pivot bearing (6) for the connecting rod (5) is displaceably arranged on the part, so that the spacing between the pivot bearing (6) and the centre axis of the shaft is alterable,
wherein, depending on the recorded effective power and/or depending on values determined from the time characteristic of the effective power, in particular extremal values, the spacing is altered, i.e. in particular the pivot bearing (6) is displaced.

10. The method according to Claim 8,
**characterised in that**
a pivot bearing (6) for the connecting rod (5) is displaceably arranged on the part so that the spacing between the pivot bearing (6) and the centre axis of the shaft is alterable,
wherein, depending on the recorded effective power and/or depending on values determined from the time characteristic of the effective power, in particular extremal values, the spacing is altered, i.e. the pivot bearing (6) is displaced,
wherein, from the time characteristic of the effective power, a local extremum is determined and the associated effective power value is supplied to a second controller as an actual value, wherein the actual value is controlled to a set value **in that** the displacement of the pivot bearing (6) is used as an actuating variable of the controller for optimising the extracting power.

11. The method according to one of Claims 8 to 10,
**characterised in that**
the first and second controller can be operated in a time-alternating manner,
in particular wherein the first controller is operated over a first time period, in particular a predeterminable time period, in each case and the second controller is then operated over a second time period, in particular a predeterminable time period.

12. The method according to one of claims 8 to 11,
**characterised in that**
the first controller is effective with a smaller time constant than the second controller,
in particular wherein the first and second controller are operated at the same time.

## Revendications

1. Dispositif de forage à bielle (5),
comprenant un élément fixement relié à un arbre et sur lequel est disposé un palier de rotation (6) au moyen duquel la bielle (5) est reçue par sa première région terminale par l'élément, en particulier de telle sorte qu'un entraînement excentrique de la bielle (5) peut être effectué,
sachant que des contrepoids (9, 10) sont disposés à translation sur l'élément au moyen d'un premier entraînement,
**caractérisé en ce qu'**un premier calculateur, qui commande la translation des contrepoids (9, 10), est prévu sur l'élément,
sachant que le palier de rotation (6) est disposé à translation sur l'élément au moyen d'un deuxième entraînement, de sorte que la distance entre le palier de rotation (6) et l'axe médian de l'arbre peut être modifiée,
sachant que la translation du palier de rotation (6) peut être commandée au moyen du premier calculateur,
sachant que les contrepoids (9, 10) sont disposés à translation de telle sorte que le centre de gravité de l'ensemble formé de l'élément, des contrepoids et des composants associés fixement reliés à l'élément est mobile en translation parallèlement à la ligne de jonction entre le palier de rotation (6) et l'axe de l'arbre.

2. Dispositif de forage selon la revendication 1, **caractérisé en ce que** l'arbre est un arbre de sortie d'une transmission qui est entraînée par un moteur électrique et/ou un moteur à combustion.

3. Dispositif de forage selon au moins une des revendications précédentes, **caractérisé en ce que** le dispositif de forage est une pompe à puits profond, en particulier une pompe à pétrole pour le forage de pétrole brut.

4. Dispositif de forage selon au moins une des revendications précédentes, **caractérisé en ce que** l'élément est un flasque de manivelle et/ou une unique plaque servant de poids ou au moins deux plaques servant de poids.

5. Dispositif de forage selon au moins une des revendications précédentes, **caractérisé en ce qu'**un premier calculateur, qui présente une liaison d'échange de données vers un deuxième calculateur disposé stationnairement, est disposé sur l'élément,
sachant que la liaison d'échange de données est réalisée sans éléments de contact et/ou sans contact physique, en particulier au moyen d'ondes électromagnétiques telles que des ondes infrarouge ou des ondes radio.

6. Dispositif de forage selon au moins une des revendications précédentes, **caractérisé en ce que** des moyens pour détecter la puissance effective de l'entraînement qui entraîne l'arbre sont reliés au deuxième calculateur disposé stationnairement.

7. Dispositif de forage selon au moins une des revendications précédentes, **caractérisé en ce que** le premier calculateur et les autres consommateurs électriques disposés sur l'élément sont alimentés sans éléments de contact, en particulier par induction,
sachant en particulier qu'un système de conducteur primaire est disposé stationnairement et qu'au moins un enroulement secondaire, qui est prévu couplé par induction, est prévu sur l'élément,
sachant en particulier qu'est respectivement relié en parallèle et/ou en série à l'enroulement secondaire un condensateur tel que la fréquence de résonance associée correspond pour l'essentiel à la fréquence d'un courant alternatif injecté dans le système de conducteur primaire.

8. Procédé de régulation d'un dispositif de forage selon la revendication 1,
sachant que la bielle (5) est entraînée par un entraînement, en particulier de manière excentrique,
**caractérisé en ce qu'**on détecte la puissance effective de l'entraînement,
sachant que le ou au moins un contrepoids est déplacé en translation en fonction de la puissance effective détectée, en particulier en fonction de son signe, et/ou en fonction de valeurs déterminées à partir de l'allure de la puissance effective en fonction du temps, en particulier de valeurs extrêmes,
sachant qu'on détermine un extremum local à partir de l'allure de la puissance effective en fonction du temps et que la valeur associée de puissance effective est apportée comme valeur réelle à un premier régulateur, sachant que la valeur réelle est régulée en direction d'une valeur de consigne par le fait qu'on utilise comme grandeur réglante du régulateur la translation du contrepoids afin d'obtenir une exploitation de l'entraînement purement par moteur,
sachant que la valeur de consigne est nulle ou présente une valeur positive.

9. Procédé selon la revendication 8, **caractérisé en ce que** la bielle (5) est entraînée par un entraînement par l'intermédiaire d'un flasque de manivelle réalisée comme élément ou pièce,
sachant qu'un palier de rotation (6) pour la bielle (5) est disposé à translation sur l'élément, de sorte que la distance entre le palier de rotation (6) et l'axe médian de l'arbre peut être modifiée,
sachant que la distance est modifiée, en particulier donc le palier de rotation (6) est déplacé en translation, en fonction de la puissance effective détectée et/ou en fonction de valeurs déterminées à partir de l'allure de la puissance effective en fonction du temps, en particulier de valeurs extrêmes.

10. Procédé selon la revendication 8, **caractérisé en ce qu'**un palier de rotation (6) pour la bielle (5) est disposé à translation sur l'élément, de sorte que la distance entre le palier de rotation (6) et l'axe médian de l'arbre peut être modifiée, sachant que la distance est modifiée, en particulier donc le palier de rotation (6) est déplacé en translation, en fonction de la puissance effective détectée et/ou en fonction de valeurs déterminées à partir de l'allure de la puissance effective en fonction du temps, en particulier de valeurs extrêmes,
sachant qu'on détermine un extremum local à partir de l'allure de la puissance effective en fonction du temps et que la valeur associée de puissance effective est apportée comme valeur réelle à un deuxième régulateur, sachant que la valeur réelle est régulée en direction d'une valeur de consigne par le fait qu'on utilise comme grandeur réglante du régulateur la translation du palier de rotation (6) afin d'optimiser la puissance de forage.

11. Procédé selon l'une des revendications 8 à 10, **caractérisé en ce que** le premier régulateur et le deuxième régulateur sont exploités alternativement dans le temps,
sachant en particulier que le premier régulateur est exploité dans un premier intervalle de temps, en particulier un intervalle de temps prescriptible, et que le deuxième régulateur est ensuite exploité dans un deuxième intervalle de temps, en particulier un intervalle de temps prescriptible.

12. Procédé selon l'une des revendications 8 à 11, **caractérisé en ce que** le premier régulateur est actif avec une plus petite constante de temps que le deuxième régulateur,
sachant en particulier que le premier régulateur et le deuxième régulateur sont exploités simultanément.
